(19) Europäisches Patentamt / European Patent Office / Office européen des brevets

(11) **EP 4 663 798 A1**

(12) **EUROPEAN PATENT APPLICATION**
published in accordance with Art. 153(4) EPC

(43) Date of publication:
**17.12.2025 Bulletin 2025/51**

(21) Application number: **24756946.0**

(22) Date of filing: **15.02.2024**

(51) International Patent Classification (IPC):
**C22C 38/00** (2006.01)   **C21D 8/12** (2006.01)
**C21D 9/46** (2006.01)   **C22C 38/60** (2006.01)
**H01F 1/147** (2006.01)

(52) Cooperative Patent Classification (CPC):
**C21D 8/12; C21D 9/46; C22C 38/00; C22C 38/60;
H01F 1/147;** Y02P 10/20

(86) International application number:
**PCT/JP2024/005218**

(87) International publication number:
**WO 2024/172106 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.02.2023  JP 2023021568**

(71) Applicant: NIPPON STEEL CORPORATION
Chiyoda-ku
Tokyo 100-8071 (JP)

(72) Inventors:
• **YASHIKI, Hiroyoshi**
**Tokyo 100-8071 (JP)**
• **NATORI, Yoshiaki**
**Tokyo 100-8071 (JP)**
• **KATAOKA, Takashi**
**Tokyo 100-8071 (JP)**
• **TAKEDA, Kazutoshi**
**Tokyo 100-8071 (JP)**
• **MASUMITSU, Naoto**
**Tokyo 100-8071 (JP)**
• **GOHMOTO, Yuuya**
**Tokyo 100-8071 (JP)**
• **IMOTO, Yasushi**
**Tokyo 100-8071 (JP)**

(74) Representative: **Vossius & Partner
Patentanwälte Rechtsanwälte mbB
Siebertstrasse 3
81675 München (DE)**

(54) **NON-ORIENTED ELECTRICAL STEEL SHEET AND METHOD FOR MANUFACTURING SAME**

(57)    Provided is a non-oriented electrical steel sheet having a base metal chemical composition containing, in mass%, C: 0.0040% or less, Si: more than 3.50% and 4.50% or less, Mn: less than 0.60%, Al: 0.30-0.90%, P: 0.030% or less, S: 0.0018% or less, N: 0.0040% or less, Ti: less than 0.0040%, Nb: less than 0.0050%, Zr: less than 0.0050%, V: less than 0.0050%, Cu: less than 0.200%, Ni: less than 0.500%, and a total of one or both of Sn and Sb: 0.005-0.060%, with a balance being Fe and impurities; and satisfying $[4.2 \leq Si + Al + 0.5 \times Mn \leq 4.9]$, wherein the average crystal grain size of the base metal is 10 to 40 $\mu$m, the integration degree of the {111} <112> orientation is 8.0 or less, and the sheet thickness of the base metal is 0.10 to 0.30 mm.

EP 4 663 798 A1

## Description

### TECHNICAL FIELD

The present invention relates to a non-oriented electrical steel sheet and a method for manufacturing the same.

### BACKGROUND ART

In recent years, global environmental issues have been attracting attention, and the demand for energy-saving efforts has been increasing. In particular, there is a high demand for higher efficiency in electrical equipment. For this reason, there is a growing demand for improved magnetic properties in non-oriented electrical steel sheets, which are widely used as iron core materials for motors, generators, and the like. This trend is significant in drive motors for electric and hybrid vehicles and compressor motors for air conditioners. In addition, there is a growing demand for higher output power in drive motors and compressor motors, which is effective in downsizing equipment.

To achieve high efficiency in motors, it is important to reduce iron loss and copper loss, which are the main sources of losses. To reduce the iron loss, it is effective to reduce the iron loss of the electrical steel sheet used as the iron core of the motor, and to reduce the copper loss, it is effective to increase the magnetic flux density of the electrical steel sheet. On the other hand, to achieve higher output power, it is important to achieve higher torque and higher rotation speed. Increasing the magnetic flux density of the electrical steel sheet is effective for higher torque, and increasing the strength of the electrical steel sheet is effective for higher rotation speed. Therefore, low iron loss, high magnetic flux density, and high strength electrical steel sheets are required to promote higher efficiency and output of motors.

The motor core of various motors described above consists of a stator, which is a stationary element, and a rotor, which is a moving element. The characteristics required for the stator and rotor that make up the motor core are not identical. The stator requires excellent magnetic properties (low iron loss and high magnetic flux density), while the rotor requires low iron loss and excellent mechanical properties (high strength).

Since the properties required for stators and rotors are different, the desired properties can be achieved by producing different types of non-oriented electrical steel sheets for stators and rotors. However, preparing two types of non-oriented electrical steel sheets complicates the manufacturing process of the iron core and reduces the yield. Therefore, in order to achieve the low iron loss and high strength required for rotors while achieving the low iron loss and high magnetic flux density required for stators, non-oriented electrical steel sheets with excellent strength and magnetic properties have been studied in the past.

For example, attempts have been made to achieve high strength and excellent magnetic properties in Patent Documents 1 to 4.

### LIST OF PRIOR ART DOCUMENTS

### PATENT DOCUMENT

Patent Document 1: WO 2019/017426 A1
Patent Document 2: WO 2020/091039 A1
Patent Document 3: WO 2021/210672 A1
Patent Document 4: JP2010-90474 A

### SUMMARY OF INVENTION

### TECHNICAL PROBLEM

However, in order to realize a non-oriented electrical steel sheet with both high strength and low iron loss, it is necessary to include a large amount of alloying elements, as disclosed in Patent Documents 1 to 4, which reduces toughness and makes the steel sheet more susceptible to fracture during cold rolling.

The present invention was made to solve such problems and an objective thereof is to stably provide a non-oriented electrical steel sheet having high strength and excellent magnetic properties.

### SOLUTION TO PROBLEM

The gist of the present invention is a non-oriented electrical steel sheet and a method for manufacturing the same which are described hereunder.
(1) A non-oriented electrical steel sheet including a base metal having a chemical composition containing, by mass%,

C: 0.0040% or less,
Si: more than 3.50% and 4.50% or less,
Mn: less than 0.60%,
Al: 0.30 to 0.90%,
P: 0.030% or less,
S: 0.0018% or less,
N: 0.0040% or less,
Ti: less than 0.0040%,
Nb: less than 0.0050%,
Zr: less than 0.0050%,
V: less than 0.0050%,
Cu: less than 0.200%,
Ni: less than 0.500%, and
a total of one or two types of Sn and Sb: 0.005 to 0.060%,
with a balance being Fe and impurities; and
satisfying Formula (i) below, wherein:

an average crystal grain size of the base metal is 10 to 40 $\mu$m;
an integration degree of the {111}<112> orientation at a 1/4 sheet thickness position from a surface of the base metal is 8.0 or less; and
a sheet thickness of the base metal is 0.10 to 0.30 mm:

$$4.2 \leq Si + Al + 0.5 \times Mn \leq 4.9 \ \dots \ (i)$$

where, the element symbols in the above formula represent the content (mass%) of each element.

(2) The non-oriented electrical steel sheet described in (1) above, wherein the steel sheet has a tensile strength of 650 MPa or more.
(3) The non-oriented electrical steel sheet described in (1) or (2) above, wherein the steel sheet has an insulating coating on a surface of the base metal.
(4) A method for manufacturing the non-oriented electrical steel sheet described in any one of (1) to (3) above, the method including:

a hot rolling process,
a hot band annealing process at a soaking temperature of 800 to 920°C for 1 second to 10 minutes,
a descaling process by pickling after shot blasting,
a cold rolling process to reduce the sheet thickness to 0.10 to 0.30 mm, and
a final annealing process in which the steel sheet is heated to a temperature of 850°C or higher and lower than 900°C so that a heating rate in a temperature range of 500 to 850°C is 400°C/s or more, then cooled so that a holding time at 850°C or higher is 20 seconds or less,
wherein the hot rolling process, the hot band annealing process, the descaling process, the cold rolling process, and the final annealing process are sequentially performed on a steel ingot having a chemical composition including, in mass%:

C: 0.0040% or less,
Si: more than 3.50% and 4.50% or less,
Mn: less than 0.60%,
Al: 0.30 to 0.90%,
P: 0.030% or less,
S: 0.0018% or less,
N: 0.0040% or less,
Ti: less than 0.0040%,

Nb: less than 0.0050%,
Zr: less than 0.0050%,
V: less than 0.0050%,
Cu: less than 0.200%,
Ni: less than 0.500%, and
a total of one or two types of Sn and Sb: 0.005 to 0.060%,
with a balance being Fe and impurities; and
satisfying Formula (i) below:

$$4.2 \leq Si + Al + 0.5 \times Mn \leq 4.9 \ \ldots. (i)$$

where, the element symbols in the above formula represent the content (mass%) of each element.

ADVANTAGEOUS EFFECT OF INVENTION

The present invention can provide a non-oriented electrical steel sheet with high strength and excellent magnetic properties in a stable manner.

DESCRIPTION OF EMBODIMENTS

The present inventors have made the following findings as a result of their diligent study to solve the above problems.

In order to obtain a non-oriented electrical steel sheet with low iron loss, high magnetic flux density, and high strength while ensuring toughness during cold rolling, it is necessary to optimize the contents of Si, Mn, and Al, which are the main alloying elements.

Specifically, the content of Si, which has the highest solid solution strengthening ability and also contributes the most to an increase in electrical resistance, is set to more than 3.50% and 4.50% or less. In addition, in order to improve grain growth and achieve stable and excellent magnetic properties, the content of Al is set to 0.30% or more. On the other hand, in order to suppress the deterioration of toughness, the Al content is set to 0.90% or less.

Although Mn has the lowest solid solution strengthening ability among the three elements, it is an element that contributes to an increase in electrical resistance with little degradation of toughness. However, as a result of the present inventors' study, it has been found that when Mn, which has lower solid solution strengthening ability than Si and Al, is contained in excess, the magnetic flux density decreases significantly compared to the increase in strength, and it becomes difficult to improve magnetic properties in a stable manner when the Mn content is high. Therefore, the Mn content is to be less than 0.60%.

In the manufacturing process of non-oriented electrical steel sheets, it is common to perform hot band annealing before cold rolling. However, when the Si content in the steel sheet is high and the thickness must be reduced to reduce the iron loss, it is desirable to lower the soaking temperature in the hot band annealing process to suppress problems such as sheet fracture and ear cracking during cold rolling. On the other hand, it is known that the magnetic flux density increases as the soaking temperature in the hot band annealing process increases, and a lower soaking temperature results in a decrease in the magnetic flux density.

Therefore, the present inventors investigated a method to improve the magnetic flux density while lowering the soaking temperature during hot band annealing. As a result, they have found that rapid heating during the final annealing after cold rolling makes it possible to suppress the development of textures detrimental to the magnetic properties, thereby suppressing the decrease in the magnetic flux density even when the soaking temperature during hot band annealing is low.

In addition, as a result of experiments in which the present inventors conducted rapid heating to various reached temperatures, it has been found that even when rapid heating is conducted, no effect of improving magnetic properties is observed when the reached temperature is low, and that rapid heating to a temperature of 850°C or higher improves the magnetic properties.

In addition, by suppressing the reached temperature to less than 900°C and shortening the holding time in the temperature range of 850°C or higher, the crystal grains can be refined and the strength can be increased while maintaining prescribed magnetic properties.

The present invention was made based on the above findings. Each requirement of the present invention is described in detail below.

1. Overall Configuration

The non-oriented electrical steel sheet of an embodiment of the present invention is suitable for both stators and rotors due to its high strength and excellent magnetic properties. In addition, the non-oriented electrical steel sheet of the present embodiment is preferably provided with an insulating coating on a surface of the base metal, which is described below.

2. Chemical Composition of Base Metal

The reasons for the limitation of each element are as follows. In the following explanation, "%" for content means "mass percent".

C: 0.0040% or less

C (carbon) is an element that causes the iron loss deterioration of non-oriented electrical steel sheets. If the C content exceeds 0.0040%, the iron loss of the non-oriented electrical steel sheet will deteriorate and good magnetic properties cannot be obtained. Therefore, the C content is to be 0.0040% or less. The C content is preferably 0.0035% or less, and more preferably 0.0030% or less. Since C contributes to the strength of the non-oriented electrical steel sheet, when this effect is desired, the C content is preferably 0.0005% or more, and more preferably 0.0010% or more.

Si: more than 3.50% and 4.50% or less

Si (silicon) is an element that increases the electrical resistance of steel to reduce eddy current loss and improve the iron loss of the non-oriented electrical steel sheet. Si is also an effective element for increasing the strength of the non-oriented electrical steel sheet because of its high solid solution strengthening ability. To obtain these effects, the Si content is to be more than 3.50%. The Si content is preferably 3.60% or more, more preferably 3.70% or more, and even more preferably 3.80% or more. On the other hand, if the Si content is excessive, the workability will deteriorate significantly and cold rolling will be difficult. Therefore, the Si content is to be 4.50% or less. The Si content is preferably 4.40% or less, and more preferably 4.30% or less.

Mn: less than 0.60%.

Mn (manganese) is an effective element for improving the iron loss of the non-oriented electrical steel sheet by increasing the electrical resistance of steel and reducing the eddy current loss. However, since Mn has inferior solid solution strengthening ability compared to Si and Al, a large amount of Mn is required to obtain high strength, resulting in a large decrease in magnetic flux density. Therefore, the Mn content is to be less than 0.60%. The Mn content is preferably 0.55% or less, and more preferably 0.50% or less. There is no need to set a lower limit for the Mn content, but in order to obtain the above effects, the Mn content is preferably 0.10% or more, and more preferably 0.20% or more.

Al: 0.30 to 0.90%.

Al (aluminum) is an element that has the effect of reducing the eddy current loss by increasing the electrical resistance of steel and improving the iron loss of the non-oriented electrical steel sheet. Al is also an element that contributes to higher strength of the non-oriented electrical steel sheet through solid solution strengthening, although not to the same extent as Si. In addition, an addition of a suitable amount of Al has an effect of suppressing the refinement of AlN produced by the combination of Al and N in the steel, thereby improving grain growth during final annealing. To obtain these effects, the Al content is to be 0.30% or more. The Al content is preferably 0.40% or more, more preferably more than 0.45%, and even more preferably 0.50% or more. On the other hand, an excessive Al content deteriorates toughness and increases risk of fracture during cold rolling. Therefore, the Al content is to be 0.90% or less. The Al content is preferably 0.80% or less, and more preferably 0.70% or less.

In the present embodiment, the electrical resistance of the steel is ensured by appropriately controlling the contents of Si, Al, and Mn. It is also necessary to appropriately control the contents of Si, Al, and Mn from the viewpoint of ensuring strength. On the other hand, an upper limit is also necessary from the viewpoint of ensuring magnetic flux density and toughness. Therefore, in addition to the contents of Si, Al, and Mn being within the above ranges, the following Formula (i) must be satisfied. The value on the middle side of Formula (i) below is preferably 4.3 or more, and more preferably 4.4 or more, and preferably 4.8 or less, and more preferably 4.7 or less.

$$4.2 \leq Si + Al + 0.5 \times Mn \leq 4.9 \ldots\ldots (i)$$

Here, the element symbols in the above formula are the content (mass%) of each element.

P: 0.030% or less

P (phosphorus) is contained in steel as an impurity, and its excessive content significantly reduces the toughness of the non-oriented electrical steel sheet. Therefore, the P content is to be 0.030% or less. The P content is preferably 0.025% or less, and more preferably 0.020% or less. Since an extreme reduction in the P content may cause an increase in manufacturing cost, the P content is preferably 0.003% or more, and more preferably 0.005% or more.

S: 0.0018% or less

S (sulfur) is an element that increases iron loss by forming fine precipitates of MnS and degrades the magnetic properties of the non-oriented electrical steel sheet. Therefore, the S content is to be 0.0018% or less. The S content is preferably 0.0016% or less, and more preferably 0.0014% or less. Since an extreme reduction in the S content may cause an increase in manufacturing cost, the S content is preferably 0.0001% or more, more preferably 0.0003% or more, and even more preferably 0.0005% or more.

N: 0.0040% or less

N (nitrogen) is an element that is unavoidably mixed in steel and forms nitrides, which increase iron loss and deteriorate the magnetic properties of the non-oriented electrical steel sheet. Therefore, the N content is to be 0.0040% or less. The N content is preferably 0.0030% or less, and more preferably 0.0020% or less. Since an extreme reduction of the N content may cause an increase in manufacturing cost, it is preferable that the N content be 0.0005% or more.

Ti: less than 0.0040%.

Ti (titanium) is an element that is unavoidably mixed in steel and can combine with carbon or nitrogen to form precipitates (carbides and nitrides). If carbides or nitrides are formed, these precipitates themselves will degrade the magnetic properties of the non-oriented electrical steel sheet. In addition, they inhibit the growth of crystal grains during the final annealing process, thereby degrading the magnetic properties of the non-oriented electrical sheet. Therefore, the Ti content is to be less than 0.0040%. The Ti content is preferably 0.0030% or less, and more preferably 0.0025% or less. Since an extreme reduction of the Ti content may cause an increase in manufacturing cost, it is preferable for the Ti content to be 0.0005% or more.

Nb: less than 0.0050%.

Nb (niobium) is an element that contributes to high strength by combining with carbon or nitrogen to form precipitates (carbides and nitrides), but these precipitates themselves degrade the magnetic properties of the non-oriented electrical steel sheet. Therefore, the Nb content is to be less than 0.0050%. The Nb content is preferably 0.0040% or less, more preferably 0.0030% or less, and even more preferably 0.0020% or less. Since an extreme reduction of the Nb content may cause an increase in manufacturing cost, it is preferable for the Nb content to be 0.0001% or more.

Zr: less than 0.0050%.

Zr (zirconium) is an element that contributes to high strength by combining with carbon or nitrogen to form precipitates (carbides and nitrides), but these precipitates themselves degrade the magnetic properties of the non-oriented electrical steel sheet. Therefore, the Zr content is to be less than 0.0050%. The Zr content is preferably 0.0040% or less, more preferably 0.0030% or less, and even more preferably 0.0020% or less. Since an extreme reduction of the Zr content may cause an increase in manufacturing cost, it is preferable for the Zr content to be 0.0001% or more.

V: less than 0.0050%.

V (vanadium) is an element that contributes to high strength by combining with carbon or nitrogen to form precipitates (carbides and nitrides), but these precipitates themselves degrade the magnetic properties of the non-oriented electrical steel sheet. Therefore, the V content is to be less than 0.0050%. The V content is preferably 0.0040% or less, more preferably 0.0030% or less, and even more preferably 0.0020% or less. Since an extreme reduction of the V content may cause an increase in manufacturing cost, it is preferable for the V content to be 0.0001% or more.

Cu: less than 0.200%.

Cu (copper) is an element that is unavoidably mixed in steel. Intentional inclusion of Cu increases the manufacturing cost of the non-oriented electrical steel sheet. Therefore, in the present embodiment, Cu need not be positively included, and an impurity level is acceptable. The Cu content is to be less than 0.200%, which is the maximum value that can be unavoidably included in the manufacturing process. The Cu content is preferably 0.150% or less, and more preferably 0.100% or less. The lower limit of the Cu content is not particularly limited, but an extreme reduction of the Cu content may cause an increase in manufacturing cost. Therefore, the Cu content is preferably 0.001% or more, more preferably 0.003% or more, and even more preferably 0.005% or more.

Ni: less than 0.500%.

Ni (nickel) is an element that is unavoidably mixed in steel. However, since Ni is also an element that improves the strength of the non-oriented electrical steel sheet, it may be intentionally added. However, since Ni is expensive, the Ni content is to be less than 0.500%. The Ni content is preferably 0.400% or less, and more preferably 0.300% or less. The lower limit of the Ni content is not particularly limited, but an extreme reduction of the Ni content may cause an increase in manufacturing cost. Therefore, the Ni content is preferably 0.001% or more, more preferably 0.003% or more, and even more preferably 0.005% or more. In addition, when Ni is intentionally added, the Ni content is preferably 0.200% or more.

Total of one or two types of Sn and Sb: 0.005 to 0.060%.

Sn (tin) and Sb (antimony) have an effect of improving the texture and consequently increasing the magnetic flux density of the non-oriented electrical steel sheet. They are also useful for ensuring low iron loss in the non-oriented electrical steel sheet by segregating on the surface of the base metal and suppressing oxidation and nitridation during annealing. To obtain these effects, the total content of one or two types of Sn and Sb is to be 0.005% or more. The above total content is preferably 0.010% or more, and more preferably 0.015% or more. On the other hand, if the total content of Sn and Sb is excessive, the toughness of the steel will decrease and cold rolling will become difficult. Therefore, the total content of one or two types of Sn and Sb is to be 0.060% or less. The above total content is preferably 0.050% or less, and more preferably 0.040% or less.

In the chemical composition of the base metal of the non-oriented electrical steel sheet of the present invention, the balance is Fe and impurities. In this context, "impurities" refers to elements that are mixed in during the industrial manufacturing of steel due to various factors such as ores, scrap, and other raw materials and manufacturing processes, and which are acceptable to the extent that they do not adversely affect the present invention.

The content of Cr and Mo as impurity elements is not specified. In the non-oriented electrical steel sheet according to the present embodiment, the content of these elements in a range of 0.5% or less of each does not particularly affect the properties of the non-oriented electrical steel sheet. In addition, even when Ca and Mg are contained in a range of 0.002% or less of each of these elements, there is no particular effect on the properties of the non-oriented electrical steel sheet of the present embodiment. Even when rare earth elements (REM) are contained in a range of 0.004% or less, there is no particular effect on the properties of the non-oriented electrical steel sheet of the present embodiment. In the present embodiment, REM refers to a total of 17 elements consisting of Sc, Y, and lanthanides, and the above REM content refers to the total content of these elements.

O is also an impurity element, but its content in a range of 0.035% or less does not affect the properties of the non-oriented electrical steel sheet of the present embodiment. Since O can be mixed into the steel during the annealing process, even when it is contained in a range of 0.010% or less in the slab stage (i.e., ladle value), there is no particular effect on the properties of the non-oriented electrical steel sheet according to the present embodiment.

In addition to the above elements, elements such as Zn, Pb, Bi, As, B, Se may be included as impurity elements; if the content of each is within a range of 0.0050% or less, the properties of the non-oriented electrical steel sheet of the present embodiment will not be impaired.

Various known measurement methods can be used for the chemical composition of the base metal of the non-oriented electrical steel sheet of the present embodiment. For example, it can be measured using ICP emission spectrometry, ICP mass spectrometry or spark discharge optical emission spectrometry. C and S can be measured by infrared absorption method after combustion, N by inert gas fusion thermal conductivity method, and O by inert gas fusion non-dispersive infrared absorption method.

3. Crystal Grain Size

In the present embodiment, the average grain size of the base metal is to be 10 to 40 $\mu$m. By setting the average grain size of the base metal to 10 $\mu$m or more, it is possible to suppress the deterioration of hysteresis loss and improve magnetic properties. On the other hand, by setting the average grain size to 40 $\mu$m or less, it is possible to obtain the effect of improving the strength of the steel. The average grain size is preferably 12 $\mu$m or more, and more preferably 14 $\mu$m or more. In addition, the average grain size is preferably 38 $\mu$m or less, and more preferably 36 $\mu$m or less.

In the present invention, the average grain size of the base metal shall be determined in accordance with JIS G 0551: 2020 "Steels - Micrographic determination of the apparent grain size".

4. Texture

In the present embodiment, the development of textures that degrade the magnetic properties is suppressed. Specifically, the integration degree of the {111}<112> orientation is set to 8.0 or less. By suppressing the development of the {111}<112> orientation, it is possible to improve magnetic properties. The integration degree of the {111}<112> orientation is preferably 7.5 or less, and more preferably 7.0 or less. There is no need to set a lower limit for the integration degree of the {111}<112> orientation, but 1.0 is a practical lower limit.

Note that the integration degree of the {111}<112> orientation is measured by X-ray diffractometer. The integration degree is a value obtained by measuring the X-ray intensity of a standard sample having no specific orientation integration and the test material by X-ray diffraction method under the same conditions, and dividing the obtained X-ray intensity of the test material by the X-ray intensity of the standard sample. The specific measurement method is as follows. The measurement was performed on the polished surface of the non-oriented electrical steel sheet of the test material, which was chemically polished to remove the base metal from one surface to a depth of 1/4 of the sheet thickness. The integration degree of the {111}<112> orientation is determined from the crystal orientation distribution function ODF (Orientation Distribution Functions), which represents a three-dimensional texture, calculated by the series expansion method based on the pole figures of the {200}, {110}, {310}, and {211} planes of the $\alpha$-Fe phase measured by X-ray diffractometer. The integration degree of $\varphi 1 = 30°$ at $\Phi = 55°$ in the $\varphi 2 = 45°$ section of the ODF was defined as the integration degree of the {111}<112> orientation.

5. Magnetic Properties

In the non-oriented electrical steel sheet according to the present embodiment, excellent magnetic properties mean that the iron loss $W_{10/400}$ is low and the magnetic flux density $B_{50}$ is high.

Here, the magnetic properties (iron loss $W_{10/400}$ and magnetic flux density $B_{50}$) shall be measured in accordance with the Epstein test method specified in JIS C 2550-1:2011. In this case, the density of the steel sheet is assumed to be 7.65 g/cm$^3$ for magnetic measurements. Note that the iron loss $W_{10/400}$ means the iron loss occurring under the conditions of a maximum magnetic flux density of 1.0 T and a frequency of 400 Hz, and the magnetic flux density $B_{50}$ means the magnetic flux density in a magnetic field of 5000 A/m.

In the non-oriented electrical steel sheet of the present embodiment, a low iron loss $W_{10/400}$ means 22.5 W/kg or less for a sheet thickness of 0.26 mm or more, 22.0 W/kg or less for a sheet thickness of 0.21 to 0.25 mm, and 21.5 W/kg or less for a sheet thickness of 0.20 mm or less. In addition, a high magnetic flux density $B_{50}$ means 1.64 T or more for a sheet thickness of 0.26 mm or more, 1.63 T or more for a sheet thickness of 0.21 to 0.25 mm, and 1.62 T or more for a sheet thickness of 0.20 mm or less.

6. Mechanical Properties

The non-oriented electrical steel sheet according to the present embodiment has high strength. Although there is no need to limit the tensile strength particularly, it is preferable that the tensile strength be 650 MPa or more. More preferably, the tensile strength is 660 MPa or more, and even more preferably, 670 MPa or more. There is also no need to particularly limit the yield stress, but it is preferable that the yield stress be 550 MPa or more, more preferably 560 MPa or more, and even more preferably 570 MPa or more. Here, the tensile strength and yield stress are to be measured by performing a tensile test in accordance with JIS Z 2241:2022. Note that when the upper yield point is clearly produced, the yield stress shall be the stress at the upper yield point. In addition, when the upper yield point does not occur, the 0.2% proof stress shall be the yield stress.

7. Sheet Thickness

In the non-oriented electrical steel sheet according to the present embodiment, the sheet thickness of the base metal is to be 0.10 mm or more from the viewpoint of the manufacturing cost of cold rolling and final annealing. On the other hand, from the viewpoint of iron loss reduction, the sheet thickness of the base metal is to be 0.30 mm or less. Therefore, the sheet thickness of the base metal of the non-oriented electrical steel sheet of the present embodiment is 0.10 to 0.30 mm. Preferably, the sheet thickness of the base metal is 0.15 to 0.27 mm.

8. Insulating Coating

In the non-oriented electrical steel sheet according to the present embodiment, it is preferable to have an insulating coating on the surface of the base metal. Since non-oriented electrical steel sheets are stacked after core blanks are punched and then used, an insulating coating on the surface of the base metal can reduce the eddy currents between the sheets, and the eddy current loss in the core can be reduced.

The type of the insulating coating is not particularly limited, and any known insulating coating used as an insulating coating for non-oriented electrical steel sheets can be used. For example, a composite insulating coating including primarily an inorganic component and also including an organic component can be mentioned. Here, the composite insulating coating is, for example, an insulating coating primarily including at least one of metal chromate, metal phosphate, or other inorganic components such as colloidal silica, Zr compounds, and Ti compounds, in which fine organic resin particles are dispersed. In particular, from the viewpoint of reducing environmental load during manufacturing, which has become increasingly necessary in recent years, insulating coatings using metal phosphates, Zr or Ti coupling agents, or their carbonate or ammonium salts as starting materials are preferably used.

The coating amount of the insulating coating is not particularly limited, but is, for example, preferably approximately 200 to 1500 mg/m$^2$ per side, and more preferably 300 to 1200 mg/m$^2$ per side. By forming the insulating coating so that the coating amount is within the above range, it is possible to maintain excellent uniformity. In addition, when the coating amount of the insulating coating is subsequently measured, various known measurement methods can be used. For example, a method for measuring the mass difference before and after immersion in a sodium hydroxide aqueous solution, or an X-ray fluorescence method using a calibration curve method can be used as appropriate.

9. Manufacturing Method

Although there are no particular restrictions on the manufacturing method for the non-oriented electrical steel sheet of the present embodiment, the steel sheet can be manufactured by subjecting a steel ingot having the chemical composition described above to, for example, a hot rolling process, a hot band annealing process, a descaling process, a cold rolling process, and a final annealing process in order under the conditions shown below. When an insulating coating is formed on the surface of the base metal, an insulating coating forming process is performed after the above final annealing process. Each process is described in detail below.

<Hot rolling process>

A steel ingot (slab) having the above chemical composition is heated, and the heated ingot is hot-rolled to obtain a hot-rolled sheet. The heating temperature of the steel ingot for hot rolling is not specified, but, for example, 1050 to 1250°C is preferred. The thickness of the hot-rolled sheet after hot rolling is also not specified, but is preferably 1.5 to 3.0 mm, for example, in consideration of the final thickness of the base metal.

<Hot band annealing process>

Thereafter, hot band annealing is performed to reduce the iron loss of the steel sheet. It is preferable to use a continuous annealing furnace for hot band annealing, which has higher productivity and provides a more homogeneous metallographic structure after annealing, compared to batch annealing. In addition, as mentioned above, when the Si content in the steel sheet is high and the thickness of the sheet needs to be reduced to reduce iron loss, it is desirable to lower the soaking temperature in hot band annealing. Therefore, hot band annealing is performed under conditions of a soaking temperature of 800 to 920°C and a soaking time of 1 second to 10 minutes. For good magnetic properties, 820°C or higher is preferred. For good toughness, 900°C or lower is preferred.

<Descaling process>

After the hot band annealing process described above, the steel sheet is subjected to shot blasting and then pickling to remove the scale layer formed on the surface of the base metal. Since the scale layer grows during the hot band annealing process, shot blasting prior to pickling facilitates descaling by the subsequent pickling. Here the pickling conditions, such as the concentration of the acid used in pickling, the concentration of the accelerator used in pickling, and the temperature of the pickling solution are not particularly limited, and known pickling conditions can be used.

<Cold rolling process>

After the descaling process described above, the steel sheet is subjected to cold rolling. In the cold rolling process, the base metal is rolled at a reduction ratio such that the final thickness of the base metal is 0.10 to 0.30 mm

<Final annealing process>

After the above cold rolling process, final annealing is performed. In the method for manufacturing the non-oriented electrical steel sheet according to the present embodiment, it is preferable to use a continuous annealing furnace for final annealing. In the final annealing process, the sheet is heated to a temperature of 850°C or more and less than 900°C, and then cooled so that the holding time at 850°C or more is 20 seconds or less. The atmosphere is preferably a mixture of $H_2$ and $N_2$ with a ratio of 1 to 100% by volume of $H_2$ (i.e., $H_2 + N_2 = 100\%$ by volume) and a dew point of -50 to +10°C.

If the maximum reached temperature in the final annealing process is less than 850°C, the effect of the final annealing will not be sufficiently obtained, and the magnetic properties are degraded, which is not desirable. On the other hand, if the maximum reached temperature is 900°C or higher, the strength will be insufficient. In addition, if the holding time at 850°C or higher exceeds 20 seconds, the strength will be insufficient.

In the present embodiment, rapid heating in the final annealing process suppresses the development of textures that are detrimental to the magnetic properties. Therefore, in the final annealing process, heating to a temperature of 850°C or higher is performed so that the heating rate in a temperature range of 500 to 850°C is 400°C/s or more.

By setting the heating rate to 400°C/s or more, it is possible to suppress the development of textures that are detrimental to the magnetic properties. The heating rate is preferably 800°C/s or more, and more preferably 1000°C or more. Since the faster the heating rate, the better, there is no need to set an upper limit, but considering equipment limitations, a heating rate of 2000°C/s or less is preferred. In addition, as mentioned above, rapid heating to a temperature of 850°C or higher can improve the magnetic properties. In the whole heating process, including the temperature range below 500°C and even up to the soaking temperature, the average heating rate may be 1 to 2000°C/s.

It is difficult to achieve rapid heating under the conditions described above with ordinary direct heating such as gas combustion, radiant tubes, and electric heaters. Therefore, it is desirable to use electric current heating, induction heating, etc. in the present embodiment.

<Insulating coating formation process>

After the above final annealing, an insulating coating forming process is carried out as necessary. Here, the method of forming the insulating coating is not particularly limited, and a known insulating coating forming treatment liquid as described below may be used, and the treatment liquid may be applied and dried by a known method. An example of a known insulating coating is a composite insulating coating including primarily an inorganic component and further including an organic component.

The composite insulating coating is, for example, an insulating coating including primarily at least one of metal chromate, metal phosphate, or other inorganic components such as colloidal silica, Zr compounds, and Ti compounds, in which fine organic resin particles are dispersed. In particular, from the viewpoint of reducing environmental load during manufacturing, which has become increasingly necessary in recent years, insulating coatings using metal phosphates, or Zr or Ti coupling agents as starting materials, or insulating coatings using metal phosphates, or carbonates or ammonium salts of Zr or Ti coupling agents as starting materials are preferably used.

The surface of the base metal on which the insulating coating is to be formed may be subjected to any pretreatment, such as degreasing with alkali or pickling with hydrochloric acid, sulfuric acid, or phosphoric acid, etc. prior to the application of the treatment liquid. The surface of the final annealed base metal can be coated with the treatment liquid without undergoing these pretreatments.

The non-oriented electrical steel sheet of the present invention obtained in the above manner has excellent characteristics of low iron loss, high magnetic flux density, and high strength, and is therefore suitable as a material for both rotor cores and stator cores.

The present invention is described more specifically by means of the following examples, but the invention is not limited to these examples.

EXAMPLE

Slabs having the chemical compositions shown in Table 1 were heated to 1150°C, hot-rolled at a finishing temperature of 850°C to a finishing thickness of 2.0 mm, and coiled at 600°C to obtain hot-rolled steel sheets. The obtained hot-rolled steel sheets were hot band annealed in a continuous annealing furnace under the conditions shown in Table 2. The steel sheets thus obtained were descaled by shot blasting and pickling, and then cold-rolled to obtain cold-rolled steel sheets with the thickness shown in Table 2.

Furthermore, the steel sheets were subjected to final annealing under the conditions shown in Table 2 in a mixed atmosphere of $H_2$: 20%, $N_2$: 80% with a dew point of -30°C. Induction heating was used for final annealing, and the steel sheets were rapidly heated to the maximum reached temperatures shown in Table 2. Then, the steel sheets were immediately cooled after holding at the reached temperature for 0 to 1 second, and the holding time at 850°C or higher was adjusted by controlling the cooling rate. After the final annealing, an insulating coating consisting of aluminum phosphate and an acrylic-styrene copolymer resin emulsion with a particle size of 0.2 $\mu$m was applied to the steel sheet and baked at 350°C in air.

[Table 1]

Table 1

| Steel | Chemical composition (mass%, balance: Fe and impurities) | | | | | | | | | | | | | | | | Middle value of Formula (i)† |
|---|---|---|---|---|---|---|---|---|---|---|---|---|---|---|---|---|---|
| | C | Si | Mn | P | S | A1 | N | Ti | Nb | Zr | V | Cu | Ni | Sn | Sb | |
| A | 0.0025 | 3.81 | 0.45 | 0.013 | 0.0010 | 0.60 | 0.0018 | 0.0015 | 0.0008 | 0.0007 | 0.0002 | 0.029 | 0.023 | 0.029 | <0.001 | 4.6 |
| B | 0.0020 | 3.81 | 0.15 | 0.012 | 0.0022 | 0.46 | 0.0017 | 0.0016 | 0.0010 | 0.0011 | 0.0005 | 0.021 | 0.024 | 0.024 | <0.001 | 4.3 |
| C | 0.0022 | 3.75 | 0.25 | 0.014 | 0.0017 | 0.47 | 0.0018 | 0.0017 | 0.0009 | 0.0010 | 0.0006 | 0.022 | 0.023 | 0.051 | <0.001 | 4.3 |
| D | 0.0018 | 3.98 | 0.55 | 0.013 | 0.0012 | 0.46 | 0.0025 | 0.0008 | 0.0007 | 0.0008 | 0.0008 | 0.015 | 0.011 | 0.002 | 0.001 | 4.7 |
| E | 0.0018 | 4.05 | 0.56 | 0.008 | 0.0012 | 0.50 | 0.0012 | 0.0012 | 0.0006 | 0.0007 | 0.0006 | 0.010 | 0.015 | 0.034 | 0.035 | 4.8 |
| F | 0.0018 | 4.00 | 0.15 | 0.008 | 0.0004 | 0.68 | 0.0016 | 0.0014 | 0.0007 | 0.0006 | 0.0007 | 0.019 | 0.026 | 0.015 | 0.015 | 4.8 |
| G | 0.0018 | 4.01 | 0.73 | 0.010 | 0.0004 | 0.44 | 0.0025 | 0.0022 | 0.0006 | 0.0005 | 0.0003 | 0.025 | 0.020 | 0.010 | <0.001 | 4.8 |
| H | 0.0024 | 3.55 | 0.15 | 0.025 | 0.0012 | 0.48 | 0.0024 | 0.0020 | 0.0009 | 0.0006 | 0.0004 | 0.018 | 0.032 | 0.015 | 0.005 | 4.1 |
| I | 0.0025 | 3.60 | 0.15 | 0.025 | 0.0005 | 0.85 | 0.0035 | 0.0025 | 0.0008 | 0.0007 | 0.0005 | 0.021 | 0.030 | 0.015 | 0.005 | 4.5 |
| J | 0.0015 | 4.42 | 0.20 | 0.015 | 0.0009 | 0.50 | 0.0014 | 0.0014 | 0.0006 | 0.0005 | 0.0003 | 0.018 | 0.023 | 0.035 | <0.001 | 5.0 |
| K | 0.0015 | 4.21 | 0.18 | 0.010 | 0.0009 | 0.50 | 0.0013 | 0.0012 | 0.0041 | 0.0039 | 0.0004 | 0.024 | 0.030 | 0.015 | <0.001 | 4.8 |
| L | 0.0030 | 3.44 | 0.45 | 0.010 | 0.0014 | 0.60 | 0.0020 | 0.0025 | 0.0008 | 0.0008 | 0.0006 | 0.018 | 0.021 | 0.024 | <0.001 | 4.3 |
| M | 0.0024 | 4.55 | 0.10 | 0.012 | 0.0008 | 0.32 | 0.0013 | 0.0012 | 0.0007 | 0.0006 | 0.0005 | 0.018 | 0.024 | 0.025 | <0.001 | 4.9 |
| N | 0.0035 | 3.83 | 0.38 | 0.012 | 0.0010 | 0.23 | 0.0025 | 0.0015 | 0.0009 | 0.0006 | 0.0004 | 0.023 | 0.031 | 0.025 | <0.001 | 4.3 |
| O | 0.0035 | 3.93 | 0.40 | 0.012 | 0.0010 | 0.65 | 0.0026 | 0.0015 | 0.0008 | 0.0007 | 0.0002 | 0.025 | 0.028 | 0.024 | <0.001 | 4.8 |
| P | 0.0018 | 3.83 | 0.20 | 0.013 | 0.0009 | 0.96 | 0.0018 | 0.0019 | 0.0007 | 0.0005 | 0.0003 | 0.150 | 0.350 | 0.025 | <0.001 | 4.9 |
| Q | 0.0010 | 3.75 | 0.41 | 0.010 | 0.0006 | 0.70 | 0.0011 | 0.0035 | 0.0022 | 0.0009 | 0.0042 | 0.155 | 0.313 | 0.021 | <0.001 | 4.7 |
| R | 0.0025 | 3.81 | 0.42 | 0.010 | 0.0010 | 0.53 | 0.0018 | 0.0018 | 0.0007 | 0.0006 | 0.0003 | 0.022 | 0.031 | 0.026 | <0.001 | 4.6 |

† $4.2 \leq Si+Al+0.5 \times Mn \leq 4.9$ (i)
Underline indicates that value is outside of range of the present invention.

Table 2

| Test No. | Steel | Hot-band annealing | | Final annealing | | | Average crystal grain size ($\mu$m) | Integration degree of {111}<112> orientation ($\times$random) | Sheet thickness (mm) | Tensile strength (MPa) | Yield stress (MPa) | $W_{10/400}$ (W/kg) | $B_{50}$ (T) | Remarks |
|---|---|---|---|---|---|---|---|---|---|---|---|---|---|---|
| | | Soaking temperature (°C) | Soaking time (s) | Heating rate#1 (°C/s) | Reached temperature#2 (°C) | Holding time#3 (s) | | | | | | | | |
| 1 | A | 850 | 40 | 1000 | 850 | 1 | 14 | 7.0 | 0.20 | 693 | 612 | 20.9 | 1.65 | Inventive example |
| 2 | A | 850 | 40 | 1000 | 850 | 1 | 14 | 6.8 | 0.25 | 695 | 614 | 20.9 | 1.65 | Inventive example |
| 3 | A | 850 | 40 | 1000 | 850 | 1 | 15 | 6.6 | 0.30 | 695 | 615 | 21.8 | 1.66 | Inventive example |
| 4 | A | 850 | 40 | 1000 | 850 | 1 | 15 | 6.2 | 0.35 | 696 | 615 | 22.7 | 1.67 | Comparative example |
| 5 | B | 900 | 50 | 800 | 870 | 2 | 10 | 7.3 | 0.20 | 716 | 646 | 22.2 | 1.67 | Comparative example |
| 6 | C | 900 | 50 | 800 | 870 | 2 | 13 | 7.4 | 0.20 | 690 | 613 | 21.1 | 1.67 | Inventive example |
| 7 | D | 825 | 40 | 1000 | 860 | 3 | 16 | 8.3 | 0.20 | 712 | 631 | 19.8 | 1.61 | Comparative example |
| 8 | E | 825 | 40 | Fracture during cold rolling | | | | | | | | | | Comparative example |
| 9 | F | 825 | 30 | 400 | 890 | 9 | 30 | 7.8 | 0.20 | 692 | 589 | 13.5 | 1.63 | Inventive example |
| 10 | G | 825 | 30 | 400 | 890 | 9 | 28 | 7.8 | 0.20 | 679 | 580 | 13.7 | 1.61 | Comparative example |
| 11 | H | 875 | 40 | 1000 | 860 | 0.5 | 13 | 6.9 | 0.20 | 640 | 558 | 21.7 | 1.68 | Comparative example |
| 12 | I | 875 | 40 | 1000 | 860 | 0.5 | 13 | 6.7 | 0.20 | 681 | 604 | 21.1 | 1.67 | Inventive example |
| 13 | J | 800 | 50 | Fracture during cold rolling | | | | | | | | | | Comparative example |

(continued)

| Test No. | Steel | Hot-band annealing | | Final annealing | | | Average crystal grain size (μm) | Integration degree of {111}<112> orientation (×random) | Sheet thickness (mm) | Tensile strength (MPa) | Yield stress (MPa) | W_{10/400} (W/kg) | B_{50} (T) | Remarks |
|---|---|---|---|---|---|---|---|---|---|---|---|---|---|---|
| | | Soaking temperature (°C) | Soaking time (s) | Heating rate#1 (°C/s) | Reached temperature#2 (°C) | Holding time#3 (s) | | | | | | | | |
| 14 | K | 800 | 50 | 300 | 860 | 3 | 15 | 8.2 | 0.20 | 730 | 650 | 19.6 | 1.61 | Comparative example |
| 15 | K | 800 | 50 | 500 | 860 | 3 | 15 | 7.3 | 0.20 | 733 | 654 | 19.7 | 1.62 | Inventive example |
| 16 | K | 800 | 50 | 1000 | 860 | 3 | 14 | 6.8 | 0.20 | 736 | 657 | 19.9 | 1.63 | Inventive example |
| 17 | K | 800 | 50 | 1000 | 800 | 0 | 9 | 8.4 | 0.20 | 761 | 693 | 21.8 | 1.61 | Comparative example |
| 18 | L | 900 | 50 | 800 | 870 | 2 | 15 | 7.6 | 0.20 | 645 | 563 | 20.9 | 1.67 | Comparative example |
| 19 | M | 820 | 40 | Fracture during cold rolling | | | | | | | | | | Comparative example |
| 20 | N | 850 | 40 | 1000 | 860 | 1 | 9 | 7.0 | 0.20 | 673 | 605 | 22.1 | 1.66 | Comparative example |
| 21 | O | 780 | 40 | 400 | 860 | 1 | 15 | 8.5 | 0.20 | 702 | 619 | 20.0 | 1.60 | Comparative example |
| 22 | O | 860 | 40 | 400 | 860 | 1 | 16 | 7.8 | 0.20 | 700 | 617 | 19.0 | 1.62 | Inventive example |
| 23 | O | 930 | 40 | Fracture during cold rolling | | | | | | | | | | Comparative example |
| 24 | P | 800 | 60 | Fracture during cold rolling | | | | | | | | | | Comparative example |
| 25 | Q | 890 | 60 | 1000 | 880 | 5 | 21 | 6.8 | 0.20 | 685 | 589 | 16.8 | 1.64 | Inventive example |
| 26 | R | 890 | 40 | 1000 | 890 | 30 | 42 | 7.4 | 0.20 | 646 | 527 | 13.0 | 1.64 | Comparative example |

(continued)

| Test No. | Steel | Hot-band annealing | | Final annealing | | | Average crystal grain size (μm) | Integration degree of {111}<112> orientation (×random) | Sheet thickness (mm) | Tensile strength (MPa) | Yield stress (MPa) | $W_{10/400}$ (W/kg) | $B_{50}$ (T) | Remarks |
|---|---|---|---|---|---|---|---|---|---|---|---|---|---|---|
| | | Soaking temperature (°C) | Soaking time (s) | Heating rate#1 (°C/s) | Reached temperature#2 (°C) | Holding time#3 (s) | | | | | | | | |
| 27 | R | 890 | 40 | 1000 | 890 | 20 | 36 | 7.2 | 0.20 | 655 | 552 | 13.6 | 1.64 | Inventive example |
| 28 | R | 890 | 40 | 1000 | 890 | 3 | 20 | 7.0 | 0.20 | 682 | 587 | 17.2 | 1.65 | Inventive example |
| 29 | R | 890 | 40 | 1000 | 930 | 15 | 49 | 7.8 | 0.20 | 640 | 522 | 12.7 | 1.64 | Comparative example |

Underline indicates that value is outside of range of the present invention.

#1 Heating rate means a heating rate in a temperature range of 500 to 850°C.
When a reached temperature is less than 850°C, heating rate means a heating rate in a temperature range of 500°C to the reached temperature.
#2 Reached temperature means a reached temperature of rapid heating. #3 Holding time means a holding time at 850°C or higher.

In accordance with JIG G 0551:2020"Steels - Micrographic determination of the apparent grain size", the average grain size of the base metal was measured for each of the test materials obtained. Epstein test specimens were also taken from each test material in the rolling and width directions, and the iron loss $W_{10/400}$ and magnetic flux density $B_{50}$ were evaluated by the Epstein test in accordance with JIS C 2550-1:2011. Note that the magnetic measurements were performed assuming the density of the steel sheet to be 7.65 g/cm$^3$.

The base metal of each test material was removed from one surface to a depth of 1/4 of the sheet thickness by chemical polishing, and the integration degree of the {111}<112> orientation on the polished surface was determined from the crystal orientation distribution functions ODF (Orientation Distribution Functions), which represent the three-dimensional texture, calculated by the series expansion method based on the pole figures of the {200}, {110}, {310}, and {211} planes of the α-Fe phase measured by X-ray diffractometer.

Then, in accordance with JIS Z 2241:2022, a JIS No. 5 tensile test specimen was taken from each test material so that the longitudinal direction coincided with the rolling direction of the steel sheet. This test specimen was then subjected to a tensile test to measure tensile strength, also in accordance with JIS Z 2241:2022.

The above results are shown together in Table 2.

It was found that Test Nos. 1 to 3, 6, 9, 12, 15, 16, 22, 25, 27 and 28, which met the requirements of the present invention, had high tensile strength of 650 MPa or more, low iron loss $W_{10/400}$, and high magnetic flux density $B_{50}$.

In contrast, the comparative examples, Test Nos. 4, 5, 7, 8, 10, 11, 13, 14, 17 to 21, 23, 24, 26, and 29 had either inferior tensile strength, inferior iron loss $W_{10/400}$, inferior magnetic flux density $B_{50}$, or inferior toughness to the extent that they were difficult to manufacture.

Specifically, in Test No. 4, the sheet thickness was thicker than the specified range, resulting in inferior iron loss. In Test No. 5, the S content was more than the specified range, resulting in inferior iron loss due to a large amount of MnS precipitates. In Test No. 7, the total content of Sn and Sb was less than the specified range, resulting in poor magnetic flux density due to the {111}<112> orientation integration degree exceeding the specified range.

In Test No. 8, the total content of Sn and Sb was more than the specified range, resulting in reduced toughness and fracture during cold rolling, which made it impossible to measure tensile strength and magnetic properties. In Test No. 10, the Mn content was more than the specified range, resulting in poor magnetic flux density. In Test No. 11, the Si+Al+0.5×Mn value was less than the specified range, resulting in inferior iron loss and tensile strength. In Test No. 13, the Si+Al+0.5×Mn value was more than the specified range, resulting in poor toughness and fracture during cold rolling, which made it impossible to measure tensile strength and magnetic properties.

In Test No. 14, the heating rate in the final annealing was lower than the specified range, and thus the integration degree of the {111}<112> orientation exceeded the specified range, resulting in poor magnetic flux density. In Test No. 17, the temperature achieved by rapid heating in the final annealing process was lower than the specified range, and thus the integration degree of the {111}<112> orientation exceeded the specified range, resulting in poor magnetic flux density, and in addition, the average crystal grain size was smaller than the specified range, resulting in inferior iron loss.

In Test No. 18, the Si content was less than the specified range, resulting in poor tensile strength. In Test No. 19, the Si content was more than the specified range, resulting in poor toughness and fracture during cold rolling, which made it impossible to measure tensile strength and magnetic properties. In Test No. 20, the Al content was less than the specified range, resulting in poor iron loss due to the average crystal grain size after final annealing being smaller than the specified range.

In Test No. 21, the soaking temperature in hot band annealing was lower than the specified range, resulting in poor magnetic flux density due to the integration density of the {111}<112> orientation exceeding the specified range. In Test No. 23, the soaking temperature in hot band annealing was higher than the specified range, resulting in poor toughness and fracture during cold rolling, which made it impossible to measure magnetic properties.

In Test No. 24, the Al content was more than the specified range, resulting in a decrease in toughness and fracture during cold rolling, which made it impossible to measure tensile strength and magnetic properties. In Test No. 26, the holding time at 850°C or higher exceeded the specified range, resulting in poor tensile strength. In Test No. 29, the reached temperature during final annealing was higher than the specified range, and thereby the average crystal grain size was larger than the specified range, resulting poor tensile strength.

INDUSTRIAL APPLIABILTY

As described above, according to the present invention, a non-oriented electrical steel sheet having high strength and excellent magnetic properties can be stably obtained at low cost.

**Claims**

1. A non-oriented electrical steel sheet comprising a base metal having a chemical composition containing, by mass%,

C: 0.0040% or less,
Si: more than 3.50% and 4.50% or less,
Mn: less than 0.60%,
Al: 0.30 to 0.90%,
P: 0.030% or less,
S: 0.0018% or less,
N: 0.0040% or less,
Ti: less than 0.0040%,
Nb: less than 0.0050%,
Zr: less than 0.0050%,
V: less than 0.0050%,
Cu: less than 0.200%,
Ni: less than 0.500%, and
a total of one or two types of Sn and Sb: 0.005 to 0.060%,
with a balance being Fe and impurities; and
satisfying Formula (i) below, wherein:

an average crystal grain size of the base metal is 10 to 40 μm;
an integration degree of the {111}<112> orientation at a 1/4 sheet thickness position from a surface of the base metal is 8.0 or less; and
a sheet thickness of the base metal is 0.10 to 0.30 mm:

$$4.2 \le Si + Al + 0.5 \times Mn \le 4.9 \ldots (i)$$

where, the element symbols in the above formula represent the content (mass%) of each element.

2. The non-oriented electrical steel sheet according to claim 1, wherein the steel sheet has a tensile strength of 650 MPa or more.

3. The non-oriented electrical steel sheet according to claim 1 or 2, wherein the steel sheet has an insulating coating on a surface of the base metal.

4. A method for manufacturing the non-oriented electrical steel sheet according to any one of claims 1 to 3, the method comprising:

a hot rolling process,
a hot band annealing process at a soaking temperature of 800 to 920°C for 1 second to 10 minutes,
a descaling process by pickling after shot blasting,
a cold rolling process to reduce the sheet thickness to 0.10 to 0.30 mm, and
a final annealing process in which the steel sheet is heated to a temperature of 850°C or higher and lower than 900°C so that a heating rate in a temperature range of 500 to 850°C is 400°C/s or more, then cooled so that a holding time at 850°C or higher is 20 seconds or less,
wherein the hot rolling process, the hot band annealing process, the descaling process, the cold rolling process, and the final annealing process are sequentially performed on a steel ingot having a chemical composition containing, in mass%:

C: 0.0040% or less,
Si: more than 3.50% and 4.50% or less,
Mn: less than 0.60%,
Al: 0.30 to 0.90%,
P: 0.030% or less,
S: 0.0018% or less,
N: 0.0040% or less,

Ti: less than 0.0040%,
Nb: less than 0.0050%,
Zr: less than 0.0050%,
V: less than 0.0050%,
Cu: less than 0.200%,
Ni: less than 0.500%, and
a total of one or two types of Sn and Sb: 0.005 to 0.060%,
with a balance being Fe and impurities; and
satisfying Formula(i) below:

$$4.2 \leq \text{Si} + \text{Al} + 0.5 \times \text{Mn} \leq 4.9 \;\ldots\; (i)$$

where, the element symbols in the above formula represent the content (mass%) of each element.

## INTERNATIONAL SEARCH REPORT

| International application No. |
|---|
| **PCT/JP2024/005218** |

**A. CLASSIFICATION OF SUBJECT MATTER**

*C22C 38/00*(2006.01)i; *C21D 8/12*(2006.01)i; *C21D 9/46*(2006.01)i; *C22C 38/60*(2006.01)i; *H01F 1/147*(2006.01)i
FI: C22C38/00 303U; C22C38/60; C21D8/12 A; H01F1/147 183; C21D9/46 501B

According to International Patent Classification (IPC) or to both national classification and IPC

**B. FIELDS SEARCHED**

Minimum documentation searched (classification system followed by classification symbols)

C22C38/00-38/60; C21D8/12; C21D9/46; H01F1/147

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/210672 A1 (NIPPON STEEL CORPORATION) 21 October 2021 (2021-10-21)<br>entire text | 1-4 |
| A | WO 2021/125856 A2 (POSCO) 24 June 2021 (2021-06-24)<br>entire text | 1-4 |
| A | JP 2018-178197 A (NIPPON STEEL & SUMITOMO METAL CORP.) 15 November 2018 (2018-11-15)<br>entire text | 1-4 |
| A | WO 2022/139337 A1 (POSCO) 30 June 2022 (2022-06-30)<br>entire text | 1-4 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/005218**

| Patent document cited in search report | | | Publication date (day/month/year) | Patent family member(s) | | | Publication date (day/month/year) |
|---|---|---|---|---|---|---|---|
| WO | 2021/210672 | A1 | 21 October 2021 | US | 2023/0137498 | A1 | |
| | | | | entire text | | | |
| | | | | EP | 4137600 | A1 | |
| | | | | CN | 115380130 | A | |
| | | | | KR | 10-2022-0152579 | A | |
| WO | 2021/125856 | A2 | 24 June 2021 | US | 2023/0036214 | A1 | |
| | | | | entire text | | | |
| | | | | EP | 4079891 | A2 | |
| | | | | CN | 115135794 | A | |
| | | | | JP | 2023-507592 | A | |
| JP | 2018-178197 | A | 15 November 2018 | (Family: none) | | | |
| WO | 2022/139337 | A1 | 30 June 2022 | EP | 4265779 | A1 | |
| | | | | entire text | | | |
| | | | | CN | 116635555 | A | |
| | | | | JP | 2023-554663 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019017426 A1
- WO 2020091039 A1
- WO 2021210672 A1
- JP 2010090474 A

**Non-patent literature cited in the description**

- Steels - Micrographic determination of the apparent grain size. *JIS G 0551: 2020*